# EUROPÄISCHE PATENTSCHRIFT

(11) **EP 1 970 795 B1**
(45) Veröffentlichungstag und Bekanntmachung des Hinweises auf die Patenterteilung: **26.10.2011**
(21) Anmeldenummer: 08004681.6
(22) Anmeldetag: 13.03.2008
(51) Int. Cl.: G06F 3/023, G06F 21/00, G06K 7/00, G06K 11/00

(54) **POS-Tastatur mit zumindest einem Tastenfeld und einem Kartenleser**
POS keyboard with at least one keypad and a card reader
Clavier POS pourvu d'au moins un champ de touches et d'un lecteur de cartes

(30) Priorität: 14.03.2007 DE 102007012974
(43) Veröffentlichungstag der Anmeldung: 17.09.2008
(73) Patentinhaber: Preh KeyTec GmbH, 97638 Mellrichstadt (DE)
(72) Erfinder: Hochgesang, Gerhard, 97616 Bad Neustadt a. d. Saale (DE)
(74) Vertreter: Thul, Hermann

(56) Entgegenhaltungen:
- EP-A- 0 863 477
- DE-A1- 10 212 720
- DE-A1- 10 345 606
- DE-U1- 29 720 368
- DE-U1- 29 904 318
- US-A- 5 543 790
- US-B1- 6 312 175
- US-B1- 6 910 634

## Beschreibung

Die vorliegende Erfindung betrifft eine POS-Tastatur mit zumindest einem Tastenfeld und einem Kartenleser (MSR) sowie einem Smart Card Reader.

Beispielsweise aus der Druckschrift DE 103 45 606 B4 ist eine POS-Tastatur mit einem Tastenfeld und einem integrierten Kartenleser bekannt. Derartige Tastaturen werden beispielsweise bei Verkaufsvorgängen eingesetzt, bei denen die Bezahlung bargeldlos mittels Magnetstreifen- und/oder Chipkarte erfolgt.

Die Patentschrift US 5,543,790 offenbart eine Computertastatur, bei der das Tastenfeld in der Mitte unterteilt und im Vergleich zu den Rändern des Tastenfeldes angehoben ist. Damit der Nummernblock der Computertastatur flach auf einer Unterlage aufliegt, ist dieser über ein Gelenk mit dem alphanumerischen Tastenfeld verbunden.

Die DE 102 12 720 A1 betrifft einen Kartenleser für Datenarbeitsplätze wie Kassensysteme, Drucker, Multifunktions- und Kioskterminals. Hierbei wird vorgeschlagen, den Kartenleser derart anzubringen, dass auch Linkshänder ohne ergonomische Schwierigkeiten schnell und sicher eine Karte in das Lesegerät einführen können. Dazu ist der Kartenleser schwenkbar am Gehäuse eines Datenarbeitsplatzes angebracht, sodass das ausgeklappte Lesegerät in eine schräg gestellte Position zur Seitenfläche des Gehäuses um einen Drehpunkt an der unteren Anlage der Seitenfläche verschwenkt werden kann. Das Kartenlesegerät wird dadurch vom Gehäuse weggeschwenkt und soll somit für einen Linkshänder besser bedienbar werden, da das Lesegerät bzw. der Kartenschlitz vom Eingabegehäuse nach rechts wegweisend ausgerichtet ist.

Mit der US 6,312,175 B1 wird eine Tastatur mit integrierten Eingabeeinheiten, einem optischen Scanner und einem Kartenlesegerät, vorgeschlagen. Der optische Scanner ist in einem Kugelgehäuse untergebracht, das in vertikaler oder horizontaler Richtung drehbar ist, um die Lage in Bezug auf die Tastatur optimieren zu können.

Die EP 0 863 477 A1 beschreibt einen Arbeitsplatz mit einer einen Kartenleser aufweisenden Tastatur zum Anschluss an ein Terminal. Eine separat eingebundene Eingabeeinheit ist hierbei über eine Kabelverbindung mit der Tastatur verbunden.

Die DE 297 20 368 U1, gegen die der Anspruch 1 abgegrenzt wurde, offenbart eine POS-Tastatur mit separatem Kartenleser, wobei die beiden Module verschwenkbar zueinander angeordnet sind.

US 6,910,634 B1 offenbart eine POS-Tastatur mit einem Kartenleser in separatem Gehäusemodul. Die beiden Module sind in der Tastaturebene schwenkbar über ein Kabel miteinander verbunden.

Ausgehend von der DE 102 12 720 A1 stellt sich die vorliegende Erfindung die Aufgabe, eine POS-Tastatur mit einem Kartenleser bereitzustellen, die besonders flexibel und auch für einen Linkshänder schnell einsetzbar ist.

Die Erfindung ist im Anspruch 1 definiert. Bevorzugte Ausführungsbeispiele sind Gegenstand der abhängigen Ansprüche.

Eine erfindungsgemäße POS-Tastatur weist zumindest ein Tastenfeld und einen Kartenleser auf, wobei das Tastenfeld und der Kartenleser in separaten Gehäusemodulen angeordnet sind und das Kartenlesemodul in der Tastaturebene schwenkbar mit dem Tastaturmodul verbunden ist. Die Schwenkbarkeit des Kartenlesemoduls im Vergleich zum Tastaturmodul, die beispielsweise durch eine Schwenkeinrichtung zwischen den beiden Gehäusemodulen erzielt wird, erlaubt es dem Benutzer der POS-Tastatur, das Kartenlesemodul in eine für ihn vorteilhafte Position zu bringen. So ist es beispielsweise möglich, dass das Kartenlesemodul an einer Seite des Tastaturmoduls anliegt und durch Schwenken um 270° an die Hinterkante des Tastaturmoduls verlegt wird und umgekehrt

Bevorzugt ist das Kartenlesemodul zusätzlich entlang des Randes des Tastaturmoduls verschiebbar angeordnet. Dadurch ist es möglich, ein an einer Seitenkante des Tastaturmoduls anliegendes Kartenlesemodul nach vorne oder hinten beziehungsweise ein an der hinteren Kante des Tastaturmoduls anliegendes Kartenlesemodul nach links oder rechts zu verschieben. Dies wird in vorteilhafter Weise durch eine Führungsschiene im Tastaturmodul erreicht, in der die Schwenkeinrichtung verschiebbar ist.

Bevorzugt weist die POS-Tastatur Rastpunkte an vorgegebenen Relativpositionen zwischen den beiden Gehäusemodulen auf. Durch diese Rastpunkte wird sichergestellt, dass sich das Kartenlesemodul, beispielsweise beim Einführen der Karte, nicht ungewollt verschiebt, da für eine Verschiedung die Rastkraft zu überwinden ist. Die Rastpunkte sind beispielsweise so angeordnet, dass das Kartenlesemodul bündig mit einer Seitenkante oder der Hinterkante des Tastaturmoduls abschließt, oder mittig an einer der Kanten des Tastaturmoduls anliegt.

In einer Ausgestaltungsform der Erfindung enthält das Tastaturmodul der POS-Tastatur ein alphanumerisches Tastenfeld. Alternativ oder zusätzlich enthält das Tastaturmodul der POS-Tastatur ein Tastenfeld mit Sondertasten.

Die vorliegende Erfindung soll anhand eines Ausführungsbeispiels näher erläutert werden.

Dabei zeigt
- Figur 1: eine POS-Tastatur mit rechts anliegendem Kartenleser und
- Figur 2: die POS-Tastatur aus Figur 1 mit geschwenktem Kartenleser.

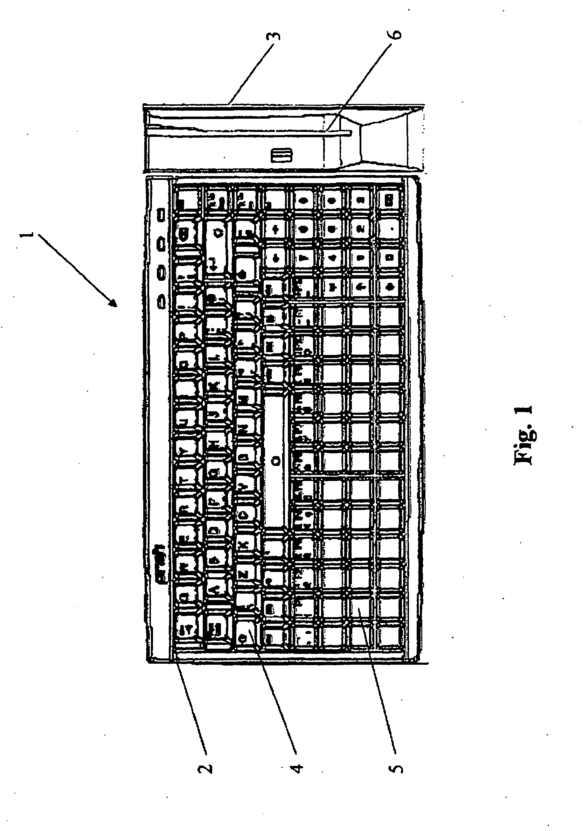

Dargestellt in Figur 1 ist eine POS-Tastatur 1 bestehend aus einem Tastaturmodul 2 und einem Kartentesemodul 3. Das Tastaturmodul 2 und das Kartenlesemodul 3 stellen eigenständige Gehäuse dar, die über eine Schwenkeinrichtung miteinander verbunden sind. Das Kartenlesemodul 3 ist in der Tastaturebene, die vorliegend der Zeichenebene entspricht, um das Tastaturmodul 2 schwenkbar.

Das Tastaturmodul 2 weist ein Tastenfeld mit einem alphanumerischen Bereich 4 und einem Funktionstastenbereich 5 auf. Die Funktionstasten im Bereich 5 weisen eine vom Einsatzgebiet der POS-Tastatur 1 abhängige Tastenbelegung auf. Das Kartenlesemodul 3 weist einen Schlitz 6 auf, hinter dem ein nicht dargestellter Magnetstreifenleser angeordnet ist. Der Kartenleser im Kartenlesemodul 3 ist alternativ als Chipkartenleser und/oder als Hybridkartenleser sowohl für Magnetstreifen- als auch für Chipkarten ausgebildet.

In der in Figur 1 dargestellten Anordnung liegt das Kartenlesemodul 3 flächig an der rechten Seitenkante des Tastaturmoduls 2 an. Diese Anordnung ist insbesondere für Rechtshänder zur schnellen Einführung der Karte in den Kartenleseschlitz 6 vorteilhaft.

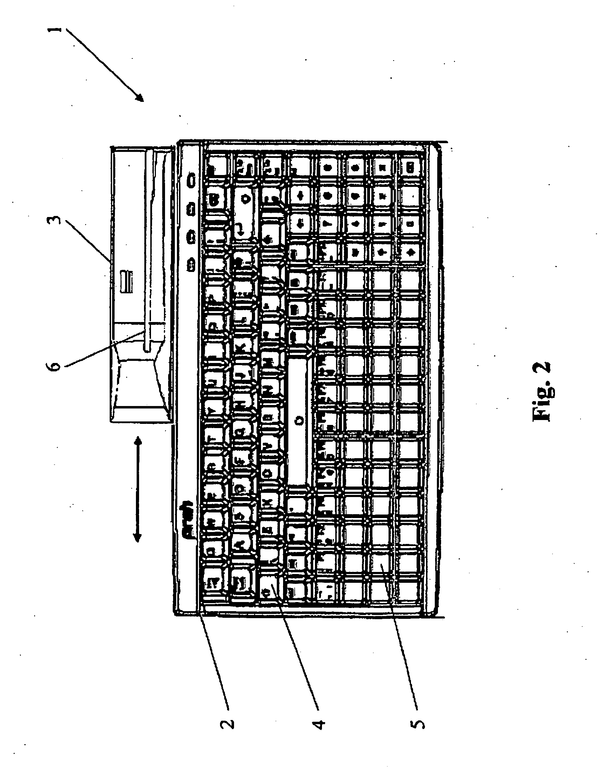

In der in Figur 2 dargestellten Anordnung wurde das Kartenlesemodul 3 um 270° gegen den Uhrzeigersinn gedreht, so dass es nun an der hinteren Kante des Tastaturmoduls 2 anliegt. Durch den Doppelpfeil ist angedeutet, dass das Kartenlesemodul 3 entlang der hinteren Kante des Tastaturmoduls 2 nach links und rechts verschiebbar ist. Befindet sich das Kartenlesemodul 3 am linken Rand der hinteren Kante des Tastaturmoduls 2, so kann das Karteniesemodul 3 um weitere 90° gegen den Uhrzeigersinn geschwenkt und an der linken Seite des Tastaturmoduls 2 zur Anlage gebracht werden.

## Patentansprüche

1. POS-Tastatur (1) mit zumindest einem Tastenfeld und einem Kartenleser, wobei
- das Tastenfeld und der Kartenleser in separaten Gehäusemodulen (2, 3) angeordnet sind und das Kartenlesemodul (3) in der Tastaturebene schwenkbar mit dem Tastaturmodul (2) verbunden ist, das Kartenlesemodul (3) flächig in einer ersten Stellung an der rechten Seitenkante des Tastaturmoduls (2) anliegt,
- das Kartenlesemodul (3) und das Tastaturmodul (2) über eine Schwenkeinrichtung miteinander verbunden sind,
- das Kartenlesemodul (3) gegen den Uhrzeigersinn gedreht werden kann, sodass es in einer zweiten Stellung an der hinteren Kante des Tastaturmoduls (2) anliegt,
**dadurch gekennzeichnet, dass**
- das Kartenlesemodul (3) entlang des Randes des Tastaturmoduls (2) verschiebbar angeordnet ist, sodass es möglich ist,
ein an einer Seitenkante des Tastaturmoduls (2) anliegendes Kartenlesemodul (3) nach vorne oder hinten zu verschieben
und ein an der hinteren Kante des Tastaturmoduls (2) anliegendes Kartenlesemodul (3) nach links oder rechts zu verschieben.

2. POS-Tastatur (1) nach Anspruch 1, **dadurch gekennzeichnet, dass** das Kartenlesemodul (3) nach Verschiebung weiter gegen den Uhrzeigersinn geschwenkt und an der linken Seite des Tastaturmoduls (2) zur Anlage gebracht werden kann.

3. POS-Tastatur nach Anspruch 1 oder 2, **gekennzeichnet durch** Rastpunkte an vorgegebenen Relativpositionen zwischen den beiden Gehäusemodulen (2, 3).

4. POS-Tastatur nach Anspruch 3, **dadurch gekennzeichnet, dass** die Rastpunkte so angeordnet sind, dass das Kartenlesemodul (3) bündig mit einer Seitenkante oder der Hinterkante des Tastaturmoduls (2) abschließt, oder mittig an einer der Kanten des Tastaturmoduls (2) anliegt.

5. POS-Tastatur nach einem der Ansprüche 1 bis 4, **dadurch gekennzeichnet, dass** das Tastaturmodul (2) ein alphanumerisches Tastenfeld enthält.

6. POS-Tastatur nach einem der Ansprüche 1 bis 5, **dadurch gekennzeichnet, dass** das Tastaturmodul (2) ein Tastenfeld mit Sondertasten enthält.

## Claims

1. Point-of-sale keyboard having at least a key panel and a card reader, with
- the key panel and the card reader being arranged in separate housing modules (2, 3) and the card-reading module (3) being connected to the keyboard module (2) in the plane of the keyboard in a pivotable manner, said keyboard module (3) resting flat against the right-hand side edge of the keyboard module (2) in a first position,
- the card-reading module (3) and the keyboard module (2) being connected to one another by means of a pivoting device,
- it being possible for the card-reading module (3) to be turned in the anti-clockwise direction, so that it rests against the rear edge of the keyboard module (2) in a second position,
**characterized in that**
- the card-reading module (3) is arranged such that it can be moved along the edge of the keyboard module (2), so that it is possible
to move a card-reading module (3) which rests against a side edge of the keyboard module (2) towards the front or rear, and
to move a card-reading module (3) which rests against the rear edge of the keyboard module (2) to the left or right.

2. Point-of-sale keyboard (1) according to Claim 1, **characterized in that**, after being moved, the card-reading module (3) can be pivoted further in the anti-clockwise direction and be made to rest against the left-hand side of the keyboard module (2).

3. Point-of-sale keyboard according to Claim 1 or 2, **characterized by** latching points at predefined relative positions between the two housing modules (2, 3).

4. Point-of-sale keyboard according to Claim 3, **characterized in that** the latching points are arranged such that the card-reading module (3) terminates flush with a side edge or the rear edge of the keyboard module (2), or rests centrally against one of the edges of the keyboard module (2).

5. Point-of-sale keyboard according to one of Claims 1 to 4, **characterized in that** the keyboard module (2) contains an alphanumeric key panel.

6. Point-of-sale keyboard according to one of Claims 1 to 5, **characterized in that** the keyboard module (2) contains a key panel having special keys.

## Revendications

1. Clavier POS (1) pourvu d'au moins un champ de touches et d'un lecteur de cartes, dans lequel
- le champ de touches et le lecteur de cartes sont disposés dans des modules de boîtier séparés (2, 3) et le module du lecteur de cartes (3) est relié au module du clavier (2) de manière à pouvoir basculer dans le plan du clavier, la surface du module du lecteur de cartes (3) étant appliqué dans une première position contre le bord latéral droit du module du clavier (2),
- le module du lecteur de cartes (3) et le module du clavier (2) sont reliés l'un à l'autre par l'intermédiaire d'un dispositif basculant,
- le module du lecteur de cartes (3) peut tourner dans le sens antihoraire, de telle sorte que dans une deuxième position, il s'applique contre le bord arrière du module du clavier (2),
**caractérisé en ce que**
- le module du lecteur de cartes (3) peut coulisser le long de la tranche du module du clavier (2), de telle sorte qu'il est possible
de faire coulisser vers l'avant ou vers l'arrière un module du lecteur de cartes (3) appliqué contre un bord latéral du module du clavier (2)
et de faire coulisser vers la gauche ou vers la droite un module du lecteur de cartes (3) appliqué contre le bord arrière du module du clavier (2).

2. Clavier POS (1) selon la revendication 1, **caractérisé en ce que** le module du lecteur de cartes (3) peut après glissement, de plus être basculé dans le sens antihoraire et amené en butée sur le côté gauche du module du clavier (2).

3. Clavier POS selon la revendication 1 ou 2, **caractérisé par** des points d'accrochage à des positions relatives définies entre les deux modules de boîtier (2, 3).

4. Clavier POS selon la revendication 3, **caractérisé en ce que** les points d'accrochage sont disposés de telle sorte que le module du lecteur de cartes (3) s'encastre parfaitement avec un bord latéral ou avec un bord arrière du module du clavier (2), ou au milieu d'un des bords du module du clavier (2).

5. Clavier POS selon une des revendications 1 à 4, **caractérisé en ce que** le module du clavier (2) contient un champ de touches alphanumérique.

6. Clavier POS selon une des revendications 1 à 5, **caractérisé en ce que** le module du clavier (2) contient un champ de touches avec des touches spéciales.
